**Europäisches Patentamt**

**European Patent Office**

**Office européen des brevets**

(19)

(11) Veröffentlichungsnummer: **0 101 938**

**B1**

(12)

# EUROPÄISCHE PATENTSCHRIFT

(45) Veröffentlichungstag der Patentschrift:
**18.05.88**

(51) Int. Cl.⁴: **G 06 F 3/06**

(21) Anmeldenummer: **83107406.7**

(22) Anmeldetag: **27.07.83**

(54) **Schaltungsanordnung zum Adressieren eines Plattenspeichers in einer Datensignale verarbeitenden Anlage, insbesondere Fernschreib- und Datenvermittlungsanlage.**

(30) Priorität: **29.07.82 DE 3228359**

(43) Veröffentlichungstag der Anmeldung:
**07.03.84 Patentblatt 84/10**

(45) Bekanntmachung des Hinweises auf die Patenterteilung:
**18.05.88 Patentblatt 88/20**

(84) Benannte Vertragsstaaten:
**AT CH DE FR GB IT LI NL SE**

(56) Entgegenhaltungen:
**DE-A-2 627 618**
**US-A-4 145 745**

**IBM TECHNICAL DISCLOSURE BULLETIN, Band 24, Nr. 1B, Juni 1981, Seiten 625-627, New York, US; A. GANGULY u.a.: "Increased direct-access storage device yield through defective track handling in hardware"**
**IEEE TRANSACTIONS ON COMMUNICATIONS, Band COM-20, Nr. 4, August 1972, Seiten 768-773, IEEE, New York, US; A. KAWAMATA u.a.: "Large-capacity magnetic-drum memory system for an electronic switching system"**

(73) Patentinhaber: **Siemens Aktiengesellschaft Berlin und München, Wittelsbacherplatz 2, D-8000 München 2 (DE)**

(72) Erfinder: **Märkl, Michael, Dipl.- Math., Thomas-Schwarz- Strasse 45, D-8060 Dachau (DE)**
Erfinder: **Matzner, Josef, Dipl.- Math., Rudolfstrasse 21, D-8032 Lochham (DE)**

EP 0 101 938 B1

## Beschreibung

Die Erfindung bezieht sich auf eine Schaltungsanordnung zum Adressieren von Speicherbereichen eines Plattenspeichers eines ersten Typs mit Hilfe von Adressen, die zum Adressieren von Speicherbereichen eines Plattenspeichers eines von dem genannten ersten Typ verschiedenen zweiten Typs dienen, in einer Datensignale verarbeitenden Anlage, insbesondere einer Fernschreib- und Datenvermittlungsanlage, in der der jeweilige Plattenspeicher zur sicheren Speicherung von Programmdaten und Informationsdaten bezüglich einzelner an der Anlage angeschlossener Teilnehmerstellen dient, wobei der jeweilige Plattenspeicher in eine Mehrzahl von Speicherzylindern mit wenigstens jeweils einer Speicherspur pro Plattenebene unterteilt ist.

Eine Fernschreib- und Datenvermittlungsanlage, in der eine Schaltungsanordnung der vorstehend bezeichneten Art einzusetzen ist, ist das elektronische Datenvermittlungssystem EDS. Bei diesem bekannten Datenvermittlungssystem EDS werden bisher allerdings lediglich Plattenspeicher in Form von Magnetplattenspeichern eines einzigen Typs verwendet (siehe "Unterrichtsblätter der Deutsche Bundespost" (B) Jahrgang 26/1973, Nr. 12, Seiten 307 bis 314.). Im Zuge der Erweiterung einer derartigen Vermittlungsanlage kommt es vor, daß der bei dieser Vermittlungsanlage verwendete Plattenspeichertyp nicht mehr zur Verfügung steht, sondern vielmehr durch einen anderen Plattenspeichertyp ersetzt werden muß. Dies bedeutet normalerweise, daß zum Betreiben der verschiedenen Plattenspeichertypen unterschiedliche Betriebsprogramme bereitzustellen sind, um Daten auf die betreffenden Plattenspeicher zu schreiben bzw. von diesen zu lesen. Dies ergibt sich daraus, daß die verschiedenen Plattenspeichertypen normalerweise eine unterschiedliche Größe aufweisen und unterschiedliche Speicherformate enthalten bzw. durch unterschiedliche Adressierung ansteuerbar sind. Um mit derartigen unterschiedlichen Plattenspeichertypen arbeiten zu können bzw. um den einen Plattenspeichertyp durch den anderen Plattenspeichertyp zu ersetzen, ist somit ein relativ hoher Entwicklungsaufwand erforderlich.

Es ist nun auch schon eine Adressenumsetzeinrichtung für den Einsatz in Verbindung mit Computersystemen bekannt (US-A-445 745), die eine zentrale Verarbeitungseinheit sowie periphere Speichereinrichtungen, wie Platten, Bänder und Blasenspeicher umfassen und die als sekundäre Datenspeichereinrichtungen dienen. In diesen sekundären Datenspeichereinrichtungen sind die binären Datenelemente in sequentiell adressierbaren Speichersektoren gespeichert. Diese Speichersektoren weisen genaue physikalische Lagen innerhalb der peripheren Speichereinheiten auf. Die bekannte Adressenumsetzeinrichtung weist eine erste Umsetzeinheit auf, welche die Umsetzung der Benutzerprogrammadressen in logische Adressen unter Berücksichtigung der logischen Struktur der in den peripheren Speichereinheiten gespeicherten Dateien steuert. Ferner weist die bekannte Adressenumsetzeinrichtung eine zweite Umsetzeinheit auf, welche die logischen Adressen in genaue physikalische Adressen von Sektoren der sekundären Speichereinheiten in Form von elektrischen Signalen umsetzt. Diese Umsetzung erfolgt derart, daß die sekundären Speichereinheiten so adressiert werden können, als handelte es sich um wahlfrei zugängliche Einheiten. Bei Austausch eines Typs der sekundären Speichereinheit durch einen anderen Typ ist dabei eine programmierte Änderung von quantitativen Parametern in dem die Adressenumsetzeinrichtung steuernden Programm erforderlich.

Es sind ferner ein Verfahren und eine Anordnung für die Zusammenschaltung verschiedener Magnetspeicher bekannt (DE-A-2 627 618), die unterschiedliche Spurkapazität und unterschiedliches Spurformat aufweisen. Um derartige Magnetspeicher zusammenschalten zu können, wird ein virtuelles, das Ende einer Spur kennzeichnendes Signal für einen ersten Plattenspeicher erzeugt, dessen Byte-Kapazität je Spur größer ist als die spezifische Kapazität einer zweiten Speichervorrichtung und bei welchem Daten anders formatiert sind als bei der zweiten Speichervorrichtung, so daß in einer Datenverarbeitungsanlage die zweite Speichervorrichtung durch den ersten Plattenspeicher ohne Änderung desjenigen Teiles des Programms ersetzt werden kann, welcher von der Byte-Kapazität/Spur der angeschlossenen Speichervorrichtung abhängt. Dazu ist bei dem bekannten Verfahren vorgesehen, einen Zähler in dem ersten Speicher entsprechend der Aufzeichnungsgeschwindigkeit bei der Aufzeichnung von Datensätzen in einer Spur dieses Speichers fortzuschalten, den Zählvorgang für eine vorbestimmte Anzahl von Zählschritten während der Aufzeichnung eines jeden Datensatzes zu unterbrechen, den Zählerstand zu überwachen und ein das Ende einer Spur anzeigendes Signal zu erzeugen, wenn der Zählerstand die spezifische Kapazität des zweiten Speichers überschreitet. Diese Maßnahmen erlauben es, auf die Zusammenschaltung von Magnetspeichern mit unterschiedlicher Spurkapazität und unterschiedlichem Spurformat ohne eine umfangreiche Neuprogrammierung der diese Speicher verwendenden Datenverarbeitungsanlage auszukommen. Die betreffende Vorgehensweise wird jedoch als relativ aufwendig betrachtet.

Der Erfindung liegt die Aufgabe zugrunde, eine relativ einfach aufzubauende Schaltungsanordnung anzugeben, mit deren Hilfe Speicherbereiche eines Plattenspeichers eines ersten Typs mit Hilfe von Adressen adressiert werden können, die zum direkten Adressieren von Speicherbereichen eines Plattenspeichers eines von dem betreffenden ersten Typ verschiedenen zweiten Typs dienen.

Gelöst wird die vorstehend aufgezeigte Aufgabe durch die im kennzeichnenden Teil des Patentanspruchs angegebenen Maßnahmen.

Die Erfindung bringt den Vorteil mit sich, daß mit einem insgesamt relativ einfachen Schaltungsaufbau ausgekommen werden kann, um Speicherbereiche eines Plattenspeichers eines ersten Typs mit Adressen adressieren zu können, die zum direkten Adressieren von Speicherbereichen eines Plattenspeichers eines von dem ersten Typ verschiedenen zweiten Typs dienen. Dies bedeutet, daß auf besonders einfache Weise die beiden Plattenspeicher entweder alternativ oder nacheinander mit ein und denselben Adressen betreibbar sind.

Anhand von Zeichnungen wird die Erfindung nachstehend beispielsweise näher erläutert.

FIG 1 zeigt in einem Diagramm eine Fernschreib- und Vermittlungsanlage, bei der die Schaltungsanordnung gemäß der Erfindung Anwendung findet.

FIG 2 zeigt in einem Diagramm schematisch die Gliederung zweier Plattenspeicher.

FIG 3 zeigt in einem Blockdiagramm eine mögliche Realisierung einer Umrechnungs-Schaltungsanordnung, wie sie in der in FIG 1 angedeuteten Fernschreib- und Datenvermittlungsanlage verwendbar ist.

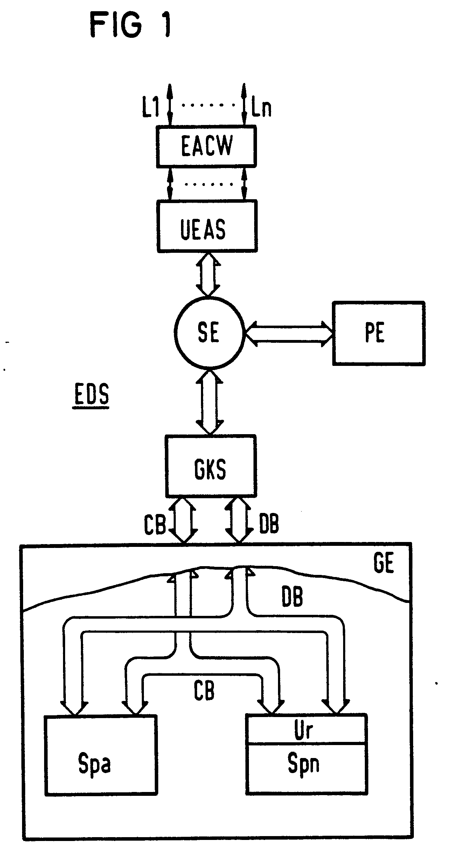

In Figur 1 ist in einem Blockdiagramm die oben bereits erwähnte bekannte Fernschreib- und Datenvermittlungsanlage EDS angedeutet, die allerdings hier mit einer Schaltungsanordnung gemäß der Erfindung ausgestattet ist. Von der Vermittlungsanlage EDS sind im vorliegenden Fall eine zentrale Speichereinheit SE, eine Programmsteuereinheit PE, eine Übertragungsablaufsteuerung UEAS, die mit einem Eingabe/Ausgabe-Codewandler EACW verbunden ist, sowie eine Gerätekanalsteuerung GKS angedeutet, die mit einer Großspeichereinheit GE verbunden ist.

Die zentrale Speichereinheit SE dient einerseits zum Speichern aller für den ordnungsgemäßen Betrieb der Anlage erforderlichen Programme und zugehörigen Daten, soweit sie arbeitsspeicherresident sein müssen, und andererseits dient die zentrale Speichereinheit SE dazu, die Abläufe in den einzelnen Verarbeitungseinheiten zu coordinieren.

Die Programmsteuereinheit PE ist für den ordnungsgemäßen Ablauf aller Programme verantwortlich; sie führt die in der Speichereinheit SE gespeicherten Befehle des Anlagenprogramms aus.

Die Übertragungsablaufsteuerung UEAS stellt in Verbindung mit dem mit ihr verbundenen Eingabe/Ausgabe-Codewandler EACW die eigentliche Leitungsanschlußeinheit dar, an der über Leitungen L1 bis Ln alle Teilnehmer- und Verbindungsleitungen aller in Frage kommenden Netztypen angeschlossen sind. Über die betreffenden Leitungen können Signale polaritätswechselweise oder in Form von Bitgruppen, sogenannten Envelopes, übertragen werden. Die Übertragungsablaufsteuerung UEAS bildet dabei den zentralen Steuerungsteil der eigentlichen Leitungsanschlußeinheit; sie stellt außerdem das Bindeglied zur Speichereinheit SE dar. Die per Eingabe/Ausgabe-Codewandler EACW, der gegebenenfalls in einer Mehrzahl vorgesehen sein kann, dient hauptsächlich dazu, in Zusammenarbeit mit zwischen ihm und den einzelnen Anschlußleitungen vorgesehenen Anschlußgruppen, die von diesen Leitungen herkommenden Signale zusammen mit einer die betreffende Leitung bezeichnenden codierten Adresse der Übertragungsablaufsteuerung UEAS zu übergeben oder von der Übertragungsablaufsteuerung UEAS herkommende Signale entsprechend den mitgelieferten Adressen an die in Frage kommenden Leitungen abzugeben.

Die Gerätekanalsteuerung GKS stellt das Bindeglied und damit die Anpassung zwischen der Speichereinheit SE und der Großspeichereinheit GE dar. In dieser Großspeichereinheit GE sind ganz allgemein Programme und Daten gespeichert; diese Programme und Daten können von der Großspeichereinheit GE zu der Speichereinheit SE übertragen werden. Alle im Zuge eines Verbindungsaufbaus und Verbindungsabbaus für Gebührenerfassung und statistische Auswertung notwendigen Informationen werden ebenfalls in der Großspeichereinheit gespeichert.

Die Großspeichereinheit GE ist im vorliegenden Fall über zwei gesonderte Busleitungen CB und DB mit der Großspeichereinheit GE verbunden. Die Busleitung CB stellt dabei eine Steuerbusleitung dar, über die Steuerbefehle übertragen werden. Die Busleitung DB stellt eine Datenbusleitung dar, über die Datensignale übertragen werden. Beide Busleitungen CB und DB umfassen jeweils eine Mehrzahl von Einzelleitungen.

Zu der Großspeichereinheit GE gehören gemäß Figur 1 zwei Plattenspeicher Spa und Spn, die beide mit den zuvor erwähnten Busleitungen CB und DB verbunden sind. Bei dem Plattenspeicher Spa handelt es sich um einen in der Vermittlungsanlage bereits vorhandenen bzw. alten Plattenspeicher. Bei dem anderen Plattenspeicher Spn handelt es sich hingegen um einen neuen Plattenspeicher, der der Vermittlungsanlage hinzugeführt ist und der dazu dient, zusätzlich oder an die Stelle des alten Plattenspeichers Spa verwendet zu werden. Die zusätzliche Verwendung des neuen Plattenspeichers Spn erfolgt beispielsweise in dem Fall, daß die Speicherkapazität des alten Plattenspeichers Spa nicht mehr ausreicht. Die Verwendung des neuen Plattenspeichers Spn anstelle des alten Plattenspeichers Spa erfolgt in dem Fall, daß der alte Plattenspeicher Spa beispielsweise nicht mehr funktionsfähig ist.

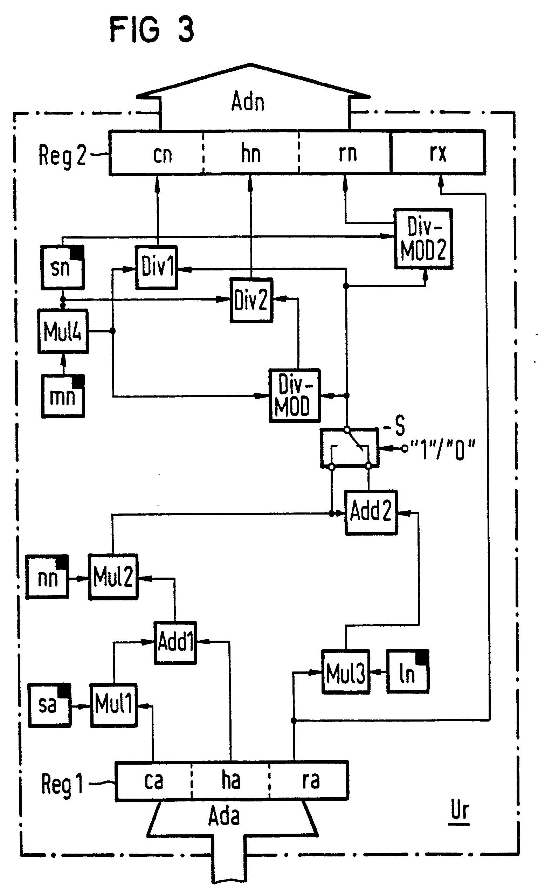

Um die Ansteuerung des neuen Plattenspeichers Spn mit Hilfe der Befehle und Adressen zu ermöglichen, die an sich für die Ansteuerung des alten Plattenspeichers Spa vorgesehen sind, ist dem neuen Plattenspeicher Spn eine gesonderte Umrechnung-Schaltungsanordnung Ur zugehörig, die sowohl an der Steuerbusleitung CB als auch an der Datenbusleitung DB angeschlossen ist und die dem neuen Plattenspeicher Spn gewissermaßen vorgeordnet ist. Auf einen möglichen Aufbau der betreffenden Umrechnungs-Schaltungsanordnung Ur wird weiter unten im Zusammenhang mit Figur 3 noch eingegangen werden.

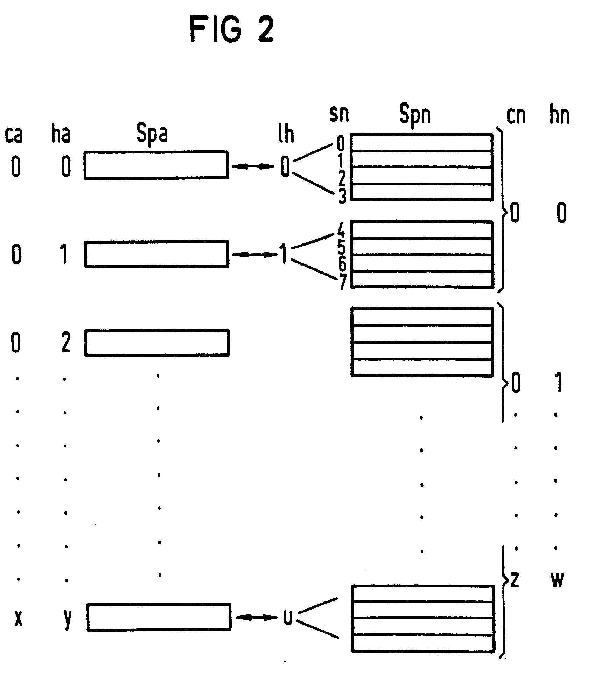

In Figur 2 ist schematisch die Aufteilung bzw. Gliederung der beiden in Figur 1 angedeuteten Plattenspeicher Spa und Spn veranschaulicht. In diesem Zusammenhang ist grundsätzlich festzustellen, daß jeder Plattenspeicher aus einer Anzahl von Einzelplatten bzw. Speicherebenen besteht, die pro sogenanntem Speicherzylinder jeweils eine Speicherspur enthalten. Unter einem Speicherzylinder wird hier ein gedachter Zylinder verstanden, der sämtliche Einzelplatten des jeweiligen Plattenspeichers durchzieht und der jeweils eine Speicherspur sämtlicher Einzelplatten des jeweiligen Plattenspeichers umfaßt. Jede Speicherspur ist dann in einer Anzahl von Sektoren unterteilt, die von gleicher Länge oder auch von unterschiedlicher Länge sein können.

Im linken Bereich der Figur 2 ist die Aufteilung des in Figur 1 angedeuteten alten Plattenspeichers Spa veranschaulicht. Dabei ist ein Speicherzylinder ausschnittweise näher angedeutet. Dieser Speicherzylinder wird durch eine Adresse ca 0 bezeichnet. Von diesem Speicherzylinder ca 0 sind in Figur 2 Speicherspuren angedeutet, die durch eine Adresse ha 0, ha 1, ha 2 bezeichnet sind. Außerdem ist in Figur 2 bezüglich des alten Plattenspeichers Spa eine Speicherspur angedeutet, die durch die Adresse ca x, ha y bezeichnet ist.

Im rechten Teil der Figur 2 ist die Aufteilung bzw. Gliederung des in Figur 1 angedeuteten neuen Plattenspeichers Spn. Wie ersichtlich, weist der neue Plattenspeicher Spn pro Speicherspur, welche durch die Adresse hn bezeichnet ist, acht Sektoren auf, die durch eine Sektornummer sn bezeichnet sind. Jeweils vier solche Sektoren bilden eine sogenannte logische Speicherspur, die durch eine Adresse lh bezeichnet ist. Eine solche logische Speicherspur dient zur Speicherung eines Informationsinhaltes, wie er in einer Speicherspur auf dem alten Plattenspeicher Spa untergebracht wird. Dabei ist die logische Speicherspur mit der Adresse lh 0 mit den durch die Sektornummern 0, 1, 2 und 3 bezeichneten Sektoren des Speicherzylinders mit der Adresse cn 0 und mit der Speicherspur-Adresse hn 0 des neuen Plattenspeichers Spn derjenigen Speicherspur des alten Plattenspeichers Spa zugeordnet, welche durch die Adresse ca 0, ha 0 bezeichnet ist. In entsprechender Weise ist derjenigen Speicherspur des alten Plattenspeichers Spa mit der Adresse ca 0, ha 1 die logische Spur mit der Adresse lh 1 innerhalb der Adresse cn 0, hn 0 des neuen Plattenspeichers Spn zugeordnet. Dabei sind die vier Sektoren mit den Sektornummern sn4 bis sn7 der betrachteten Speicherspur des alten Plattenspeichers Spa zugeordnet. In entsprechender Weise ist die durch die Adresse ca x, ha y bezeichnete Speicherspur des alten Plattenspeichers Spa vier Sektoren auf dem neuen Plattenspeicher Spn zugeordnet, welche eine logische Spur der Adresse u bilden und welche im übrigen zu einem Speicherzylinder mit der Speicherzylinderadresse cn z und der Speicherspur mit der Speicherspuradresse hn w auf dem neuen Plattenspeicher Spn gehören.

Im Hinblick auf die in Figur 2 dargestellten Verhältnisse sei noch angemerkt, daß die Speicherkapazität der jeweils eine logische Spur bildenden Sektoren auf dem neuen Plattenspeicher Spn so groß sein wird, daß diese Sektoren zumindest den Speicherinhalt haben, der durch eine Speicherspur auf dem alten Plattenspeicher Spa gegeben ist. Der alte Plattenspeicher Spa kann als Magnetplattenspeicher ausgebildet sein, der beispielsweise zweihundertunddrei Speicherzylinder mit jeweils zwanzig Speicherspuren aufweist, wobei jede Speicherspur eine Kapazität von siebentausenddreihundert Bytes aufweist. Die zu speichernden Informationsblöcke können eine variable Länge zwischen dreiundzwanzig und eintausendfünfhundert Bytes (das heißt verschiedene Blocklängen innerhalb einer Spur) haben. Wird mit festen Längen (das heißt mit konstanten Blocklängen innerhalb einer Spur) gearbeitet, so können die betreffenden Blöcke Längen zwischen einhundertsechsunddreißig und dreitausendfünfhundertundzwanzig Bytes haben. Der neuen Plattenspeicher Spn kann demgegenüber beispielsweise achthundertdreiundzwanzig Speicherzylinder mit jeweils fünf Speicherspuren aufweisen. Jeder Sektor auf dem neuen Plattenspeicher Spn mag dabei eine Speicherkapazität von zweitausendachtundvierzig Bytes haben. Dies bedeutet, daß die eine logische Spelcherspur bildenden vier Sektoren bzw. Segmente eine Gesamtspeicherkapazität von achttausendeinhundertzweiundneunzig Bytes haben; diese Speicherkapazität genügt, um siebentausenddreihundert Bytes aufzunehmen, die in einer Speicherspur auf dem alten Plattenspeicher Spa unterzubringen bzw. dort untergebracht sind.

In Figur 3 ist eine mögliche Realisierung einer in Figur 1 angedeuteten Umrechnungs-Schaltungsanordnung Ur gezeigt. Dieser Umrechnungs-Schaltungsanordnung Ur werden eingangsseitig Adressen Ada zugeführt, die zur direkten Adressierung von Speicherbereichen des alten Plattenspeichers Spa gemäß Figur 1 dienen. Jede derartige Adresse umfaßt eine Speicherzylinder-Adresse ca, eine Speicherspur-Adresse ha und eine Blocknummer-Adresse ra. Diese Adressen bzw. Adressenteile werden zunächst in einem Register Reg1 aufgenommen. Die Speicherzylinder-Adresse ca wird sodann in einem Multiplizierer Mul1 mit der Anzahl der Speicherspuren pro Speicherzylinder des alten Plattenspeichers Spa gemäß Figur 1 multipliziert. Diese Zahl ist in einem Speicher sa enthalten. Das Ergebnis der betreffenden Multiplikation wird dann in einem Addierer Add1 zu der Speicherspur-Adresse ha hinzuaddiert. Das dadurch gewonnene Ergebnis wird dann in einem weiteren Multiplizierer Mul2 mit der Anzahl der Sektoren multipliziert, die auf dem neuen Plattenspeicher Spn eine logische Spur bilden. Die betreffende Zahl ist in einem Speicher nn enthalten. Von dem Muitiplizierer Mul2 wird ausgangsseitig eine Angabe bereitgestellt, die als relative Adresse die Nummer des ersten Sektors der logischen Spur auf den neuen Plattenspeicher Spn darstellt, innerhalb derer sich der Informationsblock befindet, welcher durch die Adressenteile ca, ha, ra bezeichnet ist, von denen bisher der Adressenteil ra noch nicht betrachtet worden ist. Das Ausgangssignal des Multiplizierers Mul2 wird einem Schaltet S und einem Addierer Add2 zugeführt, auf den weiter unten noch eingegangen wird.

Die von dem Schalter S abgegebene Adresse wird einer Dividiereinrichtung bzw. einem Dividierer Div1 zugeführt, dem außerdem ein Multiplikationsergebnis zugeführt wird, welches ein Multiplizierer Mul4 aus einer Angabe Sn bezüglich der Anzahl der Sektoren pro Spur auf dem neuen Plattenspeicher Spn und aus einer Angabe bezüglich der Anzahl mn der Spuren pro Zylinder auf dem neuen Plattenspeicher Spn bildet. Diese Angaben sind in Speichern sn bzw. mn gespeichert. Die Dividiereinrichtung Div1 gibt ausgangsseitig eine absolute Adresse cn ab, welche die Zylindernummer des ersten Sektors der gesuchten logischen Speicherspur auf den neuen Plattenspeicher Spn angibt.

Das Ausgangssignal des bereits betrachteten Schalters S wird ferner einer Dividiereinrichtung Div-mod zugefürt, die eine Modulo-Division mit dem Ausgangssignal des zuvor betrachteten Multiplizierers Mul4 vornimmt. Das Ergebnis dieser Modulo-Division wird in einer weiteren Dividiereinrichtung Div2 mit der Anzahl Sn der Sektorenspeicherspur auf dem neuen Plattenspeicher Spn einer Division unterzogen. Vom Ausgang der Dividiereinrichtung Div2 wird eine Adresse hn abgegeben, welche die Spurennummer des ersten Sektors der besuchten loginschen Speicherspur auf dem neuen Plattenspeicher Spn betrifft und welche eine absolute Adresse ist.

Das Ausgangssignal des bereits betrachteten Schalters S wird einer weiteren Dividiereinrichtung Div-MOD2 zugeführt, die eine Modulo-Division mit Angabe sn bezüglich der Anzahl der Sektoren je Spur auf dem neuen Plattenspeicher Spn durchführt. Die Dividiereinrichtung DIV-MOD2 gibt ausgangsseitig die absolute Adresse rn ab, welche die Nummer des ersten Sektors der gesuchten logischen Speicherspur auf dem neuen Plattenspeicher Spn nachstellt.

Die vorstehend erwähnten, durch die Umrechnungs-Schaltungsanordnung Ur gemäß Figur 3 gebildeten Adressen bzw. Adressenteile cn, hn und rn werden in entsprechenden Registerbereichen eines Registers Reg2 aufgenommen, welches noch einen weiteren Registerbereich rx aufweist, der zur Aufnahme einer Adresse dient, welche die Nummer des gewünschten bzw. gesuchten Informationsblocks in der logischen Speicherspur betrifft. Diese Nummer ist in dem Fall, das auf dem alten Plattenspeicher Spa die Speicherspuren variable Blocklängen aufweisen, die gleiche Blocknummer, die auch in der Adresse Ada vorhanden ist. Dies bedeutet, daß in diesem Fall die Adresse aus dem Registerbereich ra des Registers Reg1 direkt in den Registerbereich rx des Registers Reg2 geleitet wird.

Sind im Unterschied zu dem gerade betrachteten Fall die Speicherspuren auf dem alten Plattenspeicher Spa in feste Blocklängen unterteilt, so befindet sich der Umschalter S gemäß Figur 3 in seiner dargestellten Schalterstellung. Demgemäß wird die in dem Registerteil ra des Registers Reg1 enthaltene Blocknummer mittels eines Multiplizierers Mul3 mit einer Angabe betreffend die Anzahl In der Sektoren multipliziert, die ein Block des alten Plattenspeichers Spa auf dem neuen Plattenspeicher Spn benötigt. Diese Angabe ist in einem Speicher In enthalten. Das Ergebnis der betreffenden Multiplikation wird dem noch nicht betrachteten Eingang des bereits erwähnten Addierers Add2 zugeführt, dem an seinem anderen Eingang vom Ausgang des Multiplizierers Mul2 her eine Angabe bezüglich der absoluten Sektornummer des ersten Sektors der gewünschten logischen Speicherspur auf dem neuen Plattenspeicher Spn gemäß Figur 1 zugeführt wird. Das Ausgangssignal des Addierers Add2 wird dem bereits betrachteten Schalter S zugeführt. In dem Register Reg2 sind in diesem Fall die Adressenteile cn, hn und rn relevant. Der Adressenteil rx ist in diesem Fall nicht relevant.

Bezüglich des Registers Reg2 kann somit zusammenfassend festgestellt werden, daß dieses Register die vollständige Information zur Adressierung eines Blocks auf dem neuen Plattenspeicher Spn enthält, und zwar bei variablen Blocklängen die absolute Adresse des ersten Sektors der logischen Spur auf dem neuen Plattenspeicher Spn, die den gesuchten Block enthält, und die Nummer des gesuchten Blocks innerhalb der logischen Speicherspur. Bei festen Blocklängen enthält das Register Reg2 die Nummer des Sektors auf dem neuen Plattenspeicher Spn, der den gesuchten Block enthält.

Mit Hilfe der in Figur 3 dargestellten Umrechnungs-Schaltungsanordnung Ur ist es somit möglich, den in Figur 1 als Plattenspeicher eines ersten Typs dargestellten neuen Plattenspeicher Spn mit Hilfe von Adressen zu adressieren, die zum Adressieren des alten Plattenspeichers Spa dienen, das heißt eines Plattenspeichers eines von dem erwähnten ersten Typ verschiedenen zweiten Typs. Das Adressieren des Plattenspeichers Spn des ersten Typs braucht dabei nicht nur dann zu erfolgen, wenn die Speicherkapazität des Plattenspeichers Spa des zweiten Typs nicht mehr ausreicht oder wenn dieser Plattenspeicher Spa nicht vorhanden ist, sondern von der betreffenden Adressierung kann auch in dem Fall Gebrauch gemacht werden, daß der Inhalt des Plattenspeichers Spa des zweiten Typs in den Plattenspeicher Spn des ersten Typs umzuspeichern ist. In diesem Fall würde ein und dieselbe Adresse zweimal hintereinander über die Datenbusleitung DB abgegeben werden, wobei im Falle des neuen Plattenspeichers Spn die Umrechnungs-Schaltungsanordnung Ur wirksam wird. Mit der über die Datenbusleitung DB abgegebenen Adresse würde für den alten Plattenspeicher Spn ein Lesebefehl abgegeben werden, und mit derselben Adresse würde für den neuen Plattenspeicher Spn ein Schreibbefehl abgegeben werden, um die von dem Plattenspeicher Spa an die Datenbusleitung DB abgegebenen Datensignale in den Plattenspeicher Spn einschreiben zu können.

## Patentanspruch

Schaltungsanordnung zum adressieren von Speicherbereichen eines Plattenspeichers (Spn) eines ersten Typs mit Hilfe von Adressen (ca, ha, ra), die zum Adressieren von Speicherbereichen eines Plattenspeichers (Spa) eines von dem genannten ersten Typ verschiedenen zweiten Typs dienen, in einer Datensignale verarbeitenden Anlage, insbesondere einer Fernschreib-Datenvermittlungsanlage (EDS), in der der jeweilige Plattenspeicher (Spn, Spa) zur sicheren Speicherung von Programmdaten und Informationsdaten bezüglich einzelner an der Anlage (EDS) angeschlossener Teilnehmerstellen dient, wobei der jeweilige Plattenspeicher (Spn, Spa) in eine Mehrzahl von Speicherzylindern mit wenigstens jeweils einer Speicherspur pro Plattenebene unterteilt ist,
dadurch gekennzeichnet,
daß bei einem in jeder Speicherspur (hn) in eine Mehrzahl von Sektoren (sn) jeweils gleicher Größe unterteilten ersten Plattenspeicher (Spn), bei dem jeder Sektor lediglich einen Teil der Speicherkapazität einer Speicherspur (ha) des zweiten Plattenspeichers (Spa) aufweist, aus der einen Informationsblock auf dem zweiten Plattenspeicher (Spa) bezeichnenden Adresse (ca, ha, ra) eine den betreffenden Informationsblock auf dem ersten Plattenspeicher (Spa) bezeichnende Adresse (cn, hn, rn) in folgender Weise gebildet wird:

- zunächst wird die Nummer (ca) des den gewünschten Informationsblock enthaltenden Speicherzylinders des zweiten Plattenspeichers (Spa) in einem ersten Multiplizierer (Mul1) mit der Anzahl (sa) der Spuren pro Zylinder auf diesem Plattenspeicher (Spa) multipliziert;
- dem so erhaltenen Produkt wird in einem ersten Addierer (Add1) die Nummer (ha) der den gewünschten Informationsblock enthaltenden Speicherspur des zweiten Plattenspeichers (Spa) hinzuaddiert;

   der so erhaltene Summenwert wird in einem zweiten Multiplizierer (Mul1) mit der Anzahl (nn) der Sektoren des ersten Plattenspeichers (Spn) multipliziert, die auf diesem Plattenspeicher (Spn) einen Spurbereich (logische Spur) bilden, welcher für die Aufnahme zumindest des in einer Speicherspur des zweiten Plattenspeichers (Spa) enthaltenen Speicherinhalts dient;
- das von dem zweiten Multiplizierer (Mul2) gelieferte Ergebnis wird mit dem Multiplikationsergebnis aus der Anzahl der Speicherspuren (mn) pro Speicherzylinder auf dem ersten Plattenspeicher (Spn) und der Anzahl (sn) der Sektoren pro Speicherspur auf dem ersten Plattenspeicher (Spn) in einer ersten Dividiereinrichtung (Div1) einer Division unterzogen, wobei durch das Ergebnis dieser Division die Nummer (cn) des den gewünschten Informationsblock enthaltenden Speicherzylinders auf dem ersten Plattenspeicher (Spn) gebildet ist;
- das genannte Multiplikationsergebnis wird mit dem von dem zweiten Multiplizierer (Mul2) gelieferten Ergebnis in einer zweiten Dividiereinrichtung (Div-mod) einer Modulo-Division unterzogen, deren Ergebnis in einer dritten Dividiereinrichtung (Div2) mit der Anzahl (sn) der Sektoren pro Speicherspur des ersten Plattenspeichers (Spn) einer weiteren Division unterzogen wird, als deren Ergebnis die Spurennummer (hn) des ersten Sektors des den gewünschten Informationsblock enthaltenden Speicherbereichs auf dem ersten Plattenspeicher (Spn) bezeichnet ist;
- die den gewünschten Informationsblock auf dem zweiten Plattenspeicher (Spa) bezeichnende Blocknummer (ra) wird bei feste Blocklängen aufweisenden Speicherspuren auf dem zweiten Plattenspeicher (Spa) in einem zweiten Addierer (Add2) mit dem von dem zweiten Multiplizierer (Mul2) gelieferten Ergebnis zusammengefaßt und bei variable Blocklängen aufweisenden Speicherspuren

auf dem zweiten Plattenspeicher (Spa) direkt in einer weiteren Dividiereinrichtung (Div-MOD2) mit der Anzahl (sn) der Sektoren pro Speicherspur des ersten Plattenspeichers (Spn) einer Modulo-Division unterzogen, als deren Ergebnis die Blocknummer (rn) bezüglich des ersten Plattenspeichers (Spn) bezeichnet ist.

## Claim

Circuit arrangement for addressing storage areas of a disk storage unit (Spn) of a first type by means of addresses (ca, ha, ra) which are used for addressing storage areas of a disk storage unt (Spa) of a second type which is different from the above first type, in a system processing data signals, particularly a telex data switching system (EDS) in which the respective disk storage unit (Spn, Spa) is used for securely storing programme data and information data with respect to individual subscriber stations connected to the system (EDS), in which arrangement the respective disk storage unit (Spn, Spa) is subdivided into a plurality of storage cylinders having in each case at least one storage track per disk plane, characterised in that in a first disk storage unit (Spn), which is subdivided into a plurality of sectors (sn) of in each case the same size in each storage track (hn), in which each sector only exhibits a part of the storage capacity of a storage track (ha) of the second disk storage unit (Spa), an address (cn, hn, cn) designating the relevant information block on the first disk storage unit (Spa) is formed from the address (ca, ha, ra) designating an informtion block on the second disk storage unit (Spa), in the following manner:
- firstly, the number (ca) of the storage cylinder of the second disk storage unit (Spa), containing the required information block, is multiplied by the number (sa) of tracks per cylinder on this disk storage unit (Spa) in a first multiplier (Mul1);
- to the product obtained in this manner, the number (ha) of the storage track of the second disk storage unit (Spa), containing the required informtion block, is added in a first adder (Add1);
- the sum value obtained in this mnner, is multiplied, in a second multiplier (Mul2), by the number (nn) of the sectors of the first disk storage unit (Spn) which form on this disk storage unit (Spn) a track area (logical track) which is used for recording at least the storage content contained in a storage track of the second disk storage unit (Spa);
- the result supplied by the second multiplier (Mul2) and the result of multiplying the number of storage tracks (mn) per storage cylinder on the first disk storage unit (Spn) by the number (ln) of the sectors per storage track on the first disk storage unit (Spn) are subjected to a division in a first dividing device (Div1), the result of this division forming the number (cn) of the storage cylinder containing the required informtion block on the first disk storage unit (Spn);
- the said multiplication result and the result supplied by the second multiplier (Mul2) are subjected to a modulo division in a second dividing device (Div-mod) the result of which is subjected in a third dividing device (Div2) to a further division by the number (sn) of sectors per storage track of the first disk storage unit (Spn), as a result of which division the track number (hn) of the first sector of the storage area containing the required information block on the first disk storage unit (Spn) is designated;
- with storage tracks exhibiting fixed block lengths on the second disk storage unit (Spa), the block number (ra) designating the required informtion block on the second disk storage unit (Spa) is combined with the result supplied by the second multiplier (Mul2) in a second adder (Add2) and, with storage tracks which exhibit variable block lengths on the second disk storage unit (Spa), is directly subjected to a modulo division by the number (sn) of sectors per storage track of the first disk storage unit (Spn) in a further dividing device (Div-MOD2), as a result of which division the block number (rn) with respect to the first disk storage unit (Spn) is designated.

## Revendication

Montage d'adressage de zones-mémoire, d'une mémoire à disque (Spn) d'un premier type, à l'aide d'adresses (ca, ha, ra), servant à l'adressage de zones-mémoire, d'une mémoire à disque (Spa) d'un second type différent dudit premier type, dans un système de traitement de données, notamment dans un système de commutation (EDS) de télégraphie et de données, dans lequel chaque mémoire à disque (Spn, Spa) sert de mémoire de sauvegarde, de données, de programme et d'informations concernant des postes-d'abonnés connectés individuellement au système (EDS), dans lequel chaque mémoire à disque (Spn, Spa) est divisée en un nombre de cylindres-mémoire avec, à chaque fois, au moins une piste-mémoire par face de disque, caractérisé en ce que, dans une première mémoire à disque (Spn) divisée, sur chaque piste-mémoire (hn), en un nombre de secteurs (sn) chaque fois de même taille, et dans laquelle chaque secteur ne présente seulement qu'une partie de la capacité-mémoire d'une piste-mémoire (ha) de la seconde mémoire à disque (Spa), à partir d'une adresse (ca, ha, ra) représentant, sur la seconde mémoire à disque (Spa), le bloc d'informations, une adresse (cn, hn, rn) représentant, sur la première mémoire à disque (Spn), le bloc d'informations correspondant est formé de la manière suivante:

- tout d'abord le numéro (ca) du cylindre-mémoire, de la seconde mémoire à disque (Spa), comprenant le bloc d'informations désiré est multiplié, dans un premier multiplicateur (Mul1), avec le nombre (sa) de pistes par cylindre de cette mémoire à disque (Spa);

- le produit ainsi obtenu est additionné, dans un premier sommateur (Add1), au numéro (ha) de la piste-mémoire, de la seconde mémoire à disque (Spa), contenant le bloc d'informations désiré;

- la somme ainsi obtenue est multipliée, dans un second multiplicateur (Mul2), avec le nombre de secteurs (nn) de la première mémoire à disque (Spn), lesquels forment une roue de pistes (piste logique) sur cette mémoire à disque (Spn), laquelle roue sert à l'enregistrement d'au moins le contenu mémoire contenu d'une piste-mémoire de la seconde mémoire à disque (Spa);

- le résultat délivré par le deuxième multiplicateur (Mul2) est soumis, dans un premier dispositif de division (Div1), à une division par le résultat de la multiplication du nombre de pistes-mémoire (mn) par cylindre-mémoire, sur la première mémoire à disque (Spn), par le nombre (sn) de secteurs par piste-mémoire, sur la première mémoire à disque (Spn), le numéro (cn) du cylindre-mémoire, contenant le bloc d'informations désiré étant formé au moyen du résultat de cette division, sur la première mémoire à disque (Spn);

- ledit résultat de multiplication est soumis, dans un deuxième dispositif de division (Div-mod), à une modulo-division, dont le résultat est soumis à une autre division, dans un troisième dispositif de division (Div2), avec le nombre (sn) de secteurs par piste-mémoire de la première mémoire à disque (Spn), et dont le résultat désigne le numéro de pistes (hn), du premier secteur de la roue-mémoire contenant le bloc d'informations désiré sur la première mémoire à disque (Spn); et

- le numéro de bloc (ra) désignant, sur la seconde mémoire à disque (Spa), le bloc d'informations désiré est, dans le cas de pistes-mémoire présentant, sur la seconde mémoire à disque (Spa), des longueurs de blocs fixes, regroupé dans un second sommateur (Add2), avec le résultat fourni par le deuxième multiplicateur (Mul2), alors que dans le cas de pistes-mémoire présentant, sur la seconde mémoire à disque (Spa), des longueurs de bloc variables, est directement soumis à une modulo-division, dans un autre dispositif de division (Div-MOD2), avec le nombre (sn) de secteurs par piste-mémoire de la première mémoire à disque (Spn), dont le résultat désigne le numéro de bloc (rn) concernant la première mémoire à disque (Spn).

# FIG 1

# FIG 2

# FIG 3